(19) Europäisches Patentamt
European Patent Office
Office européen des brevets

(11) EP 4 594 081 B1

(12) **FASCICULE DE BREVET EUROPEEN**

(45) Date de publication et mention de la délivrance du brevet:
**04.03.2026 Bulletin 2026/10**

(21) Numéro de dépôt: **23782871.0**

(22) Date de dépôt: **28.09.2023**

(51) Classification Internationale des Brevets (IPC):
***B29C 49/12*** *(2006.01)* ***B29C 49/78*** *(2006.01)*
*B29C 49/02* *(2006.01)* *B29L 31/00* *(2006.01)*

(52) Classification Coopérative des Brevets (CPC):
**B29C 49/12; B29C 49/642; B29C 49/78;**
B29C 49/42845; B29C 2049/024; B29C 2049/065; B29C 2049/7879; B29C 2049/78805; B29C 2949/0715; B29C 2949/0829; B29L 2031/7158

(86) Numéro de dépôt international:
**PCT/EP2023/076850**

(87) Numéro de publication internationale:
**WO 2024/068821 (04.04.2024 Gazette 2024/14)**

(54) **PROCEDE DE COMMANDE D'UN PROCEDE DE FORMAGE DE RECIPIENTS EN MATIERE PLASTIQUE**

VERFAHREN ZUR STEUERUNG EINES VERFAHRENS ZUR HERSTELLUNG VON KUNSTSTOFFBEHÄLTERN

METHOD FOR CONTROLLING A METHOD FOR FORMING PLASTICS CONTAINERS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.09.2022 FR 2209955**

(43) Date de publication de la demande:
**06.08.2025 Bulletin 2025/32**

(73) Titulaire: **SIDEL PARTICIPATIONS**
**76930 Octeville-sur-Mer (FR)**

(72) Inventeurs:
- **LANGLOIS, Nicolas**
**76930 OCTEVILLE-SUR-MER (FR)**
- **FEUILLOLEY, Guy**
**76930 OCTEVILLE-SUR-MER (FR)**
- **DERRIEN, Mikael**
**76930 OCTEVILLE-SUR-MER (FR)**

(74) Mandataire: **Sidel Group**
**c/o Sidel Participations**
**Avenue de la Patrouille de France**
**76930 Octeville-sur-mer (FR)**

(56) Documents cités:
**EP-B1- 2 561 972** **EP-B1- 3 172 032**
**EP-B1- 3 172 033** **US-B2- 10 471 643**
**US-B2- 9 114 559**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### Domaine technique de l'invention

L'invention se rapporte à la fabrication des récipients, tels que bouteilles ou pots, obtenus par étirage soufflage de préformes en matière thermoplastique, telle que du polyéthylène téréphtalate (PET), du polyéthylène téréphtalate recyclé (rPET).

L'invention concerne plus particulièrement un procédé de fabrication de récipients en matériau plastique, tel que du PET, par étirage soufflage de préformes, dans un moule, avec un fluide de formage sous pression, en particulier de l'air.

### Arrière-plan technique

Une telle installation de fabrication comporte généralement un système de commande, une station de chauffage et une station de soufflage. La station de soufflage comprend au moins un poste de soufflage qui comporte un moule, dans lequel les préformes sont introduites, en provenance de la station de chauffage, chacune afin de subir une opération de formage en récipient. L'opération de formage inclut une étape d'étirage (encore appelée étape d'élongation) de la préforme, à l'aide d'une tige d'élongation qui est associée au moule et est commandée en coulissement vers le fond du moule.

L'étirage et le soufflage du corps d'une préforme nécessitent que celui-ci soit porté à une température supérieure à la température de transition vitreuse du matériau. Il est ainsi tout d'abord procédé à un conditionnement thermique de la préforme en la faisant circuler à l'intérieur d'une station de chauffage. La station de chauffage comporte des moyens de chauffage qui sont par exemple formés par des lampes à infrarouge. La préforme est déplacée dans la station de chauffage par un convoyeur.

On introduit ensuite la préforme chauffée dans le moule, puis on l'étire au moyen d'une tige coulissante (appelée tige d'étirage ou d'élongation). On introduit aussi du gaz sous pression dans la préforme pour la transformer en récipient par soufflage.

L'introduction du gaz sous pression comporte dans tous les cas une étape de soufflage proprement dite, qui consiste à introduire dans la préforme un fluide de formage, généralement de l'air, sous haute pression (typiquement entre 18 et 40 bars). L'étape de soufflage est habituellement précédée d'une première étape, dite de pré-soufflage, qui consiste à introduire un gaz à une pression inférieure (entre 8 et 15 bars) alors que la tige d'élongation, ayant atteint le fond de la préforme, provoque l'étirage longitudinal de celle-ci. Les étapes d'étirage, de pré-soufflage et de soufflage (alternativement d'étirage et de soufflage) se déroulent selon un séquencement préétabli lors du paramétrage de l'installation de fabrication, séquencement qui tient compte des préformes utilisées et de la forme du récipient à obtenir. L'étirage et le soufflage (ou le pré-soufflage et le soufflage) permettent à la matière constitutive de la préforme de subir une bi-orientation moléculaire, qui confère au récipient final des propriétés mécaniques particulières. Le pré-soufflage amorce la déformation de la préforme pour la transformer en récipient et le soufflage permet une prise d'empreinte optimale dans le moule, afin que les détails du récipient soient bien marqués.

Dans la suite de la description, à moins que d'autres précisions ne soient apportées, l'expression "processus de soufflage" sera employée indistinctement pour désigner une séquence comprenant une étape de pré-soufflage suivie d'une étape de soufflage ou pour désigner un processus comprenant seulement une étape de soufflage. En conséquence, "commencer le processus de soufflage" signifiera soit débuter l'étape de pré-soufflage en injectant le gaz de pré-soufflage dans le cas où une telle étape existe, soit débuter directement l'étape de soufflage en injectant le gaz de soufflage.

Après un certain temps de contact de la matière plastique contre le moule, lors d'une étape de dégazage, on ramène la pression dans le récipient à la pression atmosphérique avant d'évacuer le récipient final du moule.

Les préformes sont obtenues généralement par injection de la matière dans des moules d'injection dédiés. Elles présentent un corps cylindrique tubulaire fermé à l'une de ses extrémités axiales, qui est ouvert à son autre extrémité par un col, lui aussi tubulaire. Le col de la préforme est généralement injecté de manière à posséder déjà la forme du col du récipient final, tandis que le corps de la préforme est appelé à subir une déformation relativement importante pour former le corps du récipient final, suite aux opérations de soufflage. Le col des préformes présente souvent une collerette d'appui destinée à les maintenir sur le bord supérieur des moules, lors de la formation des récipients.

Un récipient comporte une paroi latérale (également dénommée corps), un col qui s'étend à partir d'une extrémité supérieure du corps, et un fond qui s'étend à partir d'une extrémité inférieure du corps, à l'opposé du col. Le fond du récipient définit une assise, généralement à la jonction avec le corps, et par laquelle le récipient peut reposer sur une surface plane (telle qu'une table).

Le moule comprend une paroi définissant une cavité destinée à conférer sa forme au corps du récipient. Cette cavité est fermée, à une extrémité inférieure, par un fond de moule destiné à conférer sa forme au fond du récipient.

Aujourd'hui, pour paramétrer une installation pour produire un type de récipient donné, on place dans un moule de l'installation, alors que celle-ci est à l'arrêt, une préforme sortie d'injection, (donc froide et n'ayant pas subi de réchauffage) correspondant à celles qui seront utilisées pour ce type de récipient, puis on détermine la position de la tige d'élongation lorsque celle-ci atteint le fond de la préforme. La position à laquelle l'extrémité de la tige d'élongation atteint le fond de la préforme est conventionnellement appelée par la demanderesse point zéro ("Point 0") de l'élongation. A partir du Point 0, la continuation du mouvement de la tige d'élongation provoque l'élongation de la préforme. Lors du paramétrage, on établit aussi une position de la tige d'élongation à laquelle il faut commencer le processus de soufflage, qui peut correspondre au Point 0 ou être située au-delà de ce point. En d'autres termes, on détermine une longueur théorique d'étirage entre le Point 0 et le commencement du processus de soufflage. En effet, dès lors que la préforme commence à être étirée, si rien d'autre n'est fait, la matière constitutive de la préforme vient se resserrer sur la tige d'élongation. Une première conséquence est un risque de refroidissement excessif des zones de la préforme au contact avec la tige d'élongation (celle-ci est généralement froide) conduisant à un récipient de piètre qualité, car il devient ensuite impossible de bien déformer ces zones du fait de leur refroidissement. Une autre conséquence est un risque de détérioration, notamment par perçage, du fond de la préforme par la tige d'élongation.

D'autres opérations sont encore paramétrées entre le moment où la tige d'élongation atteint le fond de la préforme et celui où le fond de la préforme, entraîné par la tige d'élongation, atteint le fond du moule (appelé Point 10). D'autres opérations encore ont lieu après l'atteinte du Point 10.

Cette façon de procéder présente divers inconvénients. En effet, la détermination du Point 0 est réalisée lorsque l'installation est à l'arrêt, sur une préforme froide, sortie de presse d'injection.

Or, on a constaté qu'après chauffage dans la station de chauffage, la longueur du corps de certaines préformes pouvait varier, la différence pouvant atteindre 5 à 10 mm d'une préforme à l'autre. En particulier, on a constaté que pour des préformes de faible épaisseur, utilisées pour produire des bouteilles de petits formats, par exemple des bouteilles de 0,5 litre, et de faibles épaisseurs de paroi, la longueur de telles préformes en sortie de station de chauffage pouvait être inférieure de plus de 10 mm par rapport à leur longueur à l'entrée de la station de chauffage, en d'autres termes par rapport à leur longueur en sortie de presse d'injection. Dans le cas de préformes destinées à être transformées en bouteilles de petit format (typiquement des bouteilles légères d'eau de 0.5 litre), une telle réduction de longueur, encore appelée retrait ou "shrinkage" par l'homme du métier, correspond à une variation longitudinale d'environ 15%. Cette réduction s'accompagne également d'une augmentation du diamètre de la préforme. Pour le même type de bouteilles, on a noté des augmentations de diamètre d'environ 7%. D'autre part, il peut exister également, pour une même production de préformes, des écarts de quelques mm entre le retrait maximum et le retrait minimum.

L'existence d'un retrait lors la chauffe des préformes résulte de la génération de contraintes dans les préformes lors de leur fabrication. Ces contraintes apparaissent en raison des pressions ou encore de la température auxquelles la matière est soumise lors de l'injection. Pendant la chauffe, une partie des contraintes est relâchée avec, pour conséquence, une réduction de la longueur et une augmentation du diamètre des préformes. Le relâchement des contraintes est parfois appelé "relaxation".

On outre, le retrait des préformes dépend aussi de la température à laquelle elles sont chauffées dans la station de chauffage. Ainsi, entre des préformes passant dans la station de chauffage juste après sa mise en route et des préformes passant dans la station de chauffage après une heure de fonctionnement, la différence de température peut être suffisamment sensible pour que le retrait soit visiblement plus élevé sur les préformes plus chaudes.

Par ailleurs, dans la mesure où certaines préformes seront devenues plus courtes que d'autres avant leur introduction dans le moule, l'étirage effectif commencera avant l'atteinte du Point 0 déterminé lors du paramétrage. Or, la longueur étirée de la préforme avant le début de pré-soufflage influe considérablement sur la répartition de la matière de l'emballage (pour certains récipients, l'étirage doit être nul). Aussi, si l'étirage commence trop tôt par rapport au pré-soufflage, ou si un étirage a lieu alors qu'il n'aurait pas dû, et si les retraits sont différents d'une préforme à l'autre, des répartitions de matière différentes apparaîtront sur les récipients, avec un risque de resserrement de la matière sur la tige d'élongation, risque d'autant plus élevé que les récipients sont fabriqués avec un fort taux d'élongation.

Les installations actuelles sont de plus en plus automatisées, ce qui rend possible de corriger diverses dérives temporelles du procédé de soufflage. Il est connu (cf. le document W02008/081107 au nom de la demanderesse) de corréler des points singuliers d'une courbe réelle de soufflage avec des paramètres de l'installation (notamment le débit ou la pression de pré-soufflage), et d'appliquer des corrections des paramètres en fonction de divergences constatées en ces points singuliers. Cependant, l'automatisation ne permet pas de corriger des défauts tels ceux mentionnés ci avant. En effet, une ou des dérives occasionnées par la modification des caractéristiques physiques d'une préforme ne peuvent pas être corrigées par le procédé de régulation décrit dans le document WO2008/081107 précédemment cité.

Un premier objet est de remédier à ces inconvénients, en proposant un procédé permettant d'améliorer le formage des récipients produits, tout en limitant le rebut, et en maintenant - voire en augmentant - les cadences de production.

Un autre but est un procédé qui puisse, le cas échéant, être mis en œuvre dans une installation de fabrication automatisée telle que celle mentionnée dans le document WO2008/081107 précédemment cité.

Par "formage", dans la suite de la description, on entend plus particulièrement une répartition de la matière.

EP 3 172 033 B1 décrit un procédé de commande d'un procédé de formage de récipients par étirage-soufflage de préformes en matériau thermoplastique, chaque préforme comportant un corps dont une extrémité est ouverte par un col et dont une extrémité opposée est fermée par un fond, le procédé de formage comprenant, pour chaque préforme se déplaçant le long d'un trajet de production:

- une opération de chauffage de la préforme à une température prédéterminée dans une zone de chauffage;
- une opération d'introduction de la préforme chauffée dans un moule dans une zone du trajet de production;
- une opération d'étirage consistant à déplacer une tige d'élongation afin d'étirer la préforme, la tige d'élongation passant, lors de son déplacement, par une position d'impact à l'instant où elle entre en contact avec le fond de la préforme; le procédé de commande comportant:
- une étape d'ajustement de la position d'impact de la tige d'élongation à partir d'au moins une mesure de la longueur réalisée lors d'au moins une étape de mesure.

## Résumé de l'invention

L'invention propose un procédé de commande d'un procédé de formage de récipients par étirage-soufflage de préformes en matériau thermoplastique, notamment en PET, chaque préforme comportant un corps dont une extrémité est ouverte par un col et dont une extrémité opposée est fermée par un fond, le procédé de formage comprenant, pour chaque préforme se déplaçant le long d'un trajet de production :

- une opération de chauffage de la préforme à une température prédéterminée dans une zone de chauffage ;
- une opération d'introduction de la préforme chauffée dans un moule dans une zone du trajet de production ;
- une opération d'étirage consistant à déplacer une tige d'élongation afin d'étirer la préforme, la tige d'élongation passant, lors de son déplacement, par une position d'impact à l'instant où elle entre en contact avec le fond de la préforme.

Le procédé de commande réalisé selon les enseignements de l'invention comporte :

- au moins une étape de mesure de la longueur entre un point de référence du col et le fond d'une préforme qui est réalisée après l'opération de chauffage de ladite préforme et avant l'opération d'introduction de ladite préforme dans le moule ;
- une étape d'ajustement de la position d'impact de la tige d'élongation à partir d'au moins une mesure de la longueur réalisée lors d'au moins une étape de mesure.

Selon un autre aspect du procédé de commande réalisé selon les enseignements de l'invention, le point de référence du col est formé par une surface inférieure d'appui d'une collerette du col ou par un buvant du col.

Selon un autre aspect du procédé de commande réalisé selon les enseignements de l'invention, le procédé de formage comporte un processus de soufflage consistant à injecter un fluide de formage sous pression dans la préforme, le début du processus de soufflage étant déterminé en fonction de la position d'impact de la tige d'élongation ajustée lors de l'étape d'ajustement du procédé de commande.

Selon un autre aspect du procédé de commande réalisé selon les enseignements de l'invention, l'étape de mesure de la longueur est réalisée dans une zone de mesure traversée par le trajet de production, la zone de mesure étant située entre la zone de chauffage et la zone d'introduction des préformes dans le moule.

Selon un autre aspect du procédé de commande réalisé selon les enseignements de l'invention, l'opération de chauffage est réalisée dans une station de chauffage comportant un convoyeur transportant les préformes à travers la zone de chauffage, la zone de mesure étant agencée sur un tronçon du trajet de production le long duquel les préformes sont transportées par ledit convoyeur.

Selon un autre aspect du procédé de commande réalisé selon les enseignements de l'invention, l'étape de mesure est réalisée au moyen d'un dispositif de mesure sans contact qui est apte à mesurer la longueur de la préforme à la volée lors de son déplacement continu le long du trajet de production.

Selon un autre aspect du procédé de commande réalisé selon les enseignements de l'invention, le dispositif de mesure comporte un dispositif de capture d'image d'une préforme passant dans la zone de mesure, l'étape de mesure comportant une première sous-étape de capture d'une image de la préforme.

Selon un autre aspect du procédé de commande réalisé selon les enseignements de l'invention, lors de la première sous-étape de capture d'image, la préforme est éclairée par une source lumineuse située à l'opposé de la position du dispositif de capture d'image par rapport au trajet 27 de production.

Selon un autre aspect du procédé de commande réalisé selon les enseignements de l'invention, l'étape de mesure comporte une deuxième sous-étape de traitement de l'image capturée lors de la première sous-étape de capture au moyen d'une unité électronique de traitement, consistant à détecter au moins un point de mesure de l'image du fond de la préforme, puis à mesurer sur l'image la distance entre un point de référence sur l'image dont la position par rapport au col de la préforme est connue et ledit point de mesure selon la direction de l'axe de la préforme, cette distance étant ensuite convertie en une distance réelle.

Selon un autre aspect du procédé de commande réalisé selon les enseignements de l'invention, le point de référence est formé par un axe optique du dispositif de capture d'image.

Selon un autre aspect du procédé de commande réalisé selon les enseignements de l'invention, la conversion de la distance mesurée sur l'image en distance réelle est réalisée après une sous-étape de calibration.

Selon un autre aspect du procédé de commande réalisé selon les enseignements de l'invention, la sous-étape de calibration est réalisée à chaque itération de la séquence de détermination de la longueur d'une préforme, la sous-étape de calibration consistant à prendre la mesure d'une mensuration connue de la préforme, par exemple le diamètre extérieur, pour déterminer un ratio entre une distance sur l'image et une distance réelle.

Selon un autre aspect du procédé de commande réalisé selon les enseignements de l'invention, l'étape d'ajustement de la position d'impact est réalisée à partir de la longueur mesurée à l'issue de chaque itération de l'étape de mesure.

Selon un autre aspect du procédé de commande réalisé selon les enseignements de l'invention, l'étape d'ajustement de la position d'impact est réalisée à partir de la moyenne glissante de la longueur mesurée à l'issue de plusieurs itérations de l'étape de mesure réalisée successivement sur plusieurs préformes.

Selon un autre aspect du procédé de commande réalisé selon les enseignements de l'invention, l'étape de mesure est réalisée à une fréquence déterminée, par exemple pour chaque préformes passant par la zone de mesure ou pour une préforme sur un nombre déterminé de préformes.

## Brève description des figures

D'autres caractéristiques et avantages de l'invention apparaitront au cours de la lecture de la description détaillée qui va suivre pour la compréhension de laquelle on se reportera aux dessins annexés décrits brièvement ci-dessous.

[Fig.1] est une vue de dessus qui représente schématiquement une installation pour la fabrication de récipients réalisée selon les enseignements de l'invention.

[Fig.2] est une vue de côté qui représente une préforme destinée à alimenter l'installation de la [Fig.1].

[Fig.3] est une vue en coupe axiale qui représente schématiquement un poste de soufflage de l'installation de la [Fig.1].

[Fig.4] est une vue schématique de côté qui représente un dispositif de mesure de la hauteur d'une préforme réalisé selon les enseignements de l'invention qui équipe l'installation de la [Fig.1].

[Fig.5] est une vue de face qui représente une image obtenue au moyen d'un dispositif de capture d'image qui fait partie du dispositif de mesure représenté à la [Fig.4].

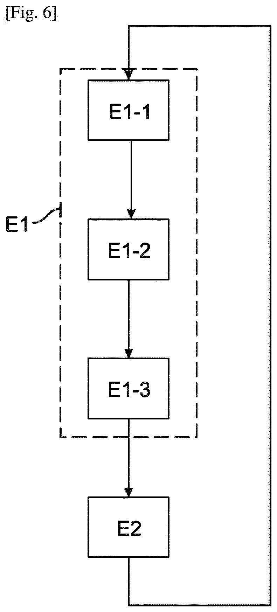

[Fig.6] est un schéma-bloc qui représente schématiquement le procédé de commande réalisé selon les enseignements de l'invention destiné à être mis en œuvre par l'installation de la [Fig.1].

## Description détaillée de l'invention

Dans la suite de la description, les termes "haut", "bas", et les termes dérivés "haute", "basse", sont utilisés par souci de clarté en référence à l'orientation des figures sans que ceci n'ait une quelconque portée limitative.

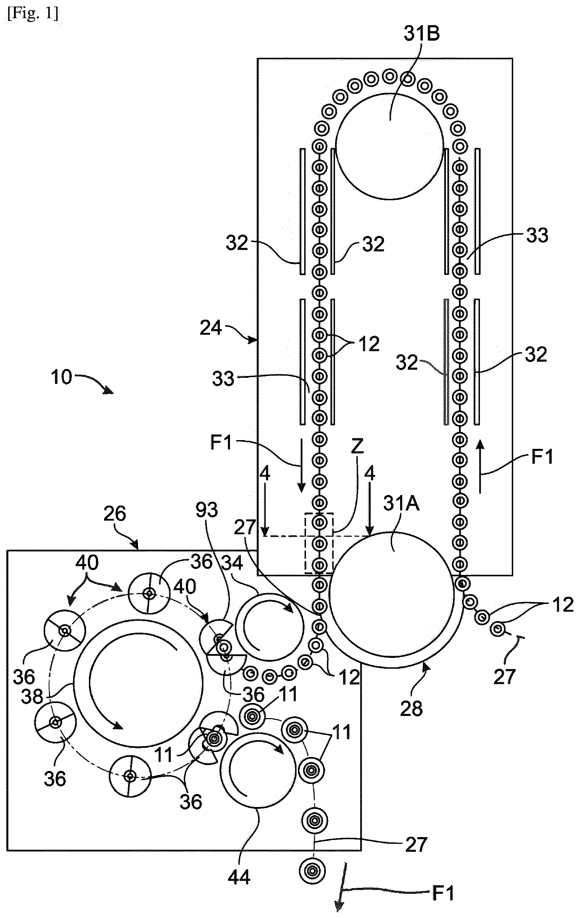

Sur la [Fig.1] est illustrée schématiquement une installation 10 pour la fabrication de récipients 11 à partir de préformes 12 en matière thermoplastique et plus particulièrement en PET (polyéthylène téréphtalate) ou en rPET (polyéthylène téréphtalate recyclé).

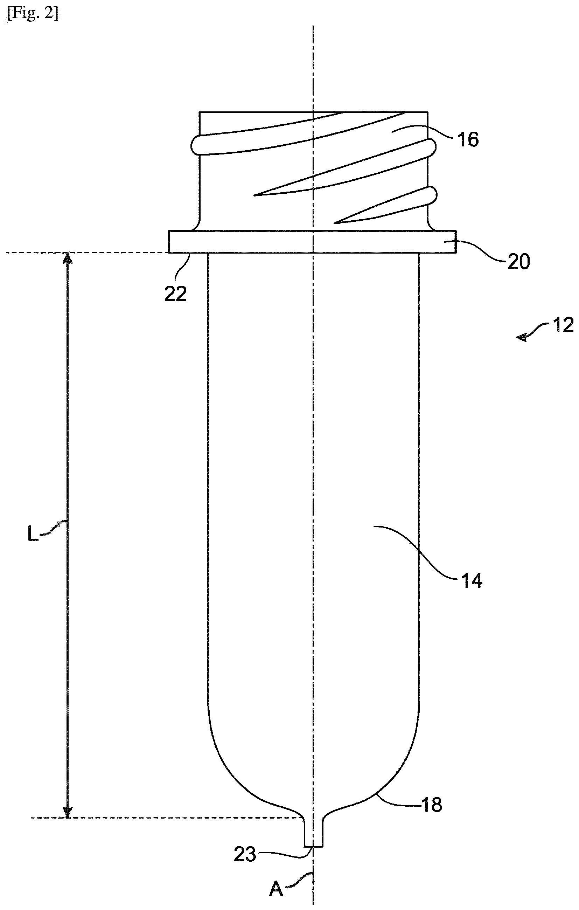

Comme représenté à la [Fig.2], chaque préforme 12 comporte un corps 14 cylindrique d'axe « A ». Une extrémité supérieure du corps 14 débouche par un col 16 à la forme définitive de celui du récipient 11 à obtenir (qui en général ne subit pas la moindre déformation pendant la fabrication du récipient). Le corps 14 comporte un fond 18 qui ferme son extrémité inférieure et dont la forme est généralement hémisphérique. Le col 16 comporte une collerette 20 agencée à sa jonction avec le corps 14. La face inférieure de la collerette 20 est destinée à former une surface 22 d'appui pour permettre de soutenir la préforme 12 pendant son moulage, comme cela sera décrit par la suite.

A la fin de leur moulage par injection, les préformes 12 sont refroidies brutalement pour conférer au matériau thermoplastique un état amorphe. Il est ainsi possible de rendre le matériau thermoplastique à nouveau malléable par chauffage au-delà d'une température de transition vitreuse.

Le fond 18 de la préforme 12 présente, au niveau de son intersection avec l'axe "A" du corps 14, un point 23 d'injection, correspondant au point d'injection du matériau thermoplastique pendant son moulage par injection.

En se reportant à nouveau à la [Fig.1], l'installation 10 de fabrication comprend une station de chauffage 24 et une station 26 de formage. Les préformes 12 se déplacent en file le long d'un trajet 27 de production qui passe à travers la station 24 de chauffage et la station 26 de formage. Le sens de déplacement des préformes 12 est indiqué par les flèches « F1 » de la [Fig.1]. Lors du fonctionnement normal de l'installation 10 de fabrication, les préformes 12 sont en déplacement constant le long du trajet 27 de production.

La station 24 de chauffage a pour fonction de chauffer le corps 14 des préformes 12 à une température supérieure ou égale à la transition vitreuse du matériau constitutif, par exemple supérieure à 70°C lorsque ce matériau est du PET. La station 24 de chauffage comprend un convoyeur 28 (illustré schématiquement) pour transporter les préformes 12 en les faisant tourner sur elles-mêmes.

Le convoyeur 28 comporte généralement des mandrins 30 qui sont emboîtés avec le col 16 pour transporter les préformes 12. Les mandrins 30 se déplacent le long d'un circuit fermé. Les mandrins 30 sont par exemple portés par les maillons d'une chaîne ou encore par des navettes indépendantes se déplaçant le long d'un rail.

Le circuit comporte ici deux tronçons rectilignes parallèles reliés par des tronçons de virage à 180°. Le convoyeur 28 comporte en outre deux roues 31A, 31B de guidage des mandrins 30 dans les portions de virage du circuit fermé.

La station 24 de chauffage comporte aussi des moyens 32 de chauffage pour chauffer les préformes 12. Il s'agit par exemple de lampes faisant face à des réflecteurs ou de sources laser qui émettent un rayonnement électromagnétique dans le domaine des infrarouges. En variante non représentée de l'invention, les moyens de chauffage émettent un rayonnement électromagnétique dans le domaine des microondes.

Les moyens 32 de chauffage sont agencés le long d'une zone 33 de chauffage du trajet 27 de production des préformes. Dans l'exemple représenté à la [Fig.1], la station 24 de chauffage comporte une zone 33 de chauffage divisée en deux parties agencées en amont et en aval de la portion de virage guidée par la roue 31B de guidage.

Les préformes 12 entrent dans la station 24 de chauffage, montées sur le convoyeur 28 sur lequel elles effectuent un tronçon en forme de U de leur trajet 27 de production passant à travers les la zone 33 de chauffage. Elles sont chauffées au défilé par les moyens 32 de chauffage, lesquels, le cas échéant, sont placés d'un côté ou de part et d'autre des préformes 12 par rapport à leur sens de défilement. Les préformes 12 chaudes sont extraites de la station 24 de chauffage après leur passage dans la zone 33 de chauffage et transférées dans des moules de la station 26 de formage par un premier dispositif 34 de transfert, tel qu'une roue de transfert, interposé entre la station 24 de chauffage et la station 26 de formage.

Selon un exemple non limitatif de réalisation, les préformes 12 sont chauffées col 16 en bas et elles sont retournées col 16 en haut entre leur sortie de la zone 33 de chauffage et avant leur sortie du convoyeur 28.

La roue de transfert comprend des bras (non représentés, car connus en soi) qui viennent saisir successivement les préformes 12, à leur sortie de la station 24 de chauffage, au niveau de leur col 16, pour les introduire chacune à leur tour dans un moule 36 de la station 26 de formage. La station 26 de formage comprend un carrousel 38 tournant à la périphérie duquel sont disposés plusieurs postes 40 de soufflage.

Chaque poste 40 de soufflage comprend au moins un moule 36 qui se compose usuellement de trois parties, soit deux demi-moules 36A, 36B et un fond de moule 36C, qui définissent une cavité 42 présentant l'empreinte du récipient 11.

Chaque préforme 12 chaude sortant de la station 24 de chauffage est introduite dans un moule 36 du poste 40 de soufflage pour y être soufflée et transformée en récipient 11. Une fois achevé, le récipient 11 est extrait du poste 40 de soufflage par un second dispositif 44 de transfert, similaire au premier dispositif 34 de transfert, et bien connu de l'homme du métier. La cavité 42 du moule 36 comporte un passage axial supérieur pour laisser le col 16 de la préforme 12 sortir de la cavité 42. Ainsi, le corps 14 est reçu dans la cavité 42 tandis que le col 16 demeure au-dessus de la cavité 42, la préforme 12 étant maintenue en position par contact entre la surface 22 d'appui de sa collerette 20 avec le pourtour du passage. La position de la surface 22 d'appui de la collerette 20 constitue ainsi un point fixe invariant pour toute préforme 12 introduite dans un moule 36 associé.

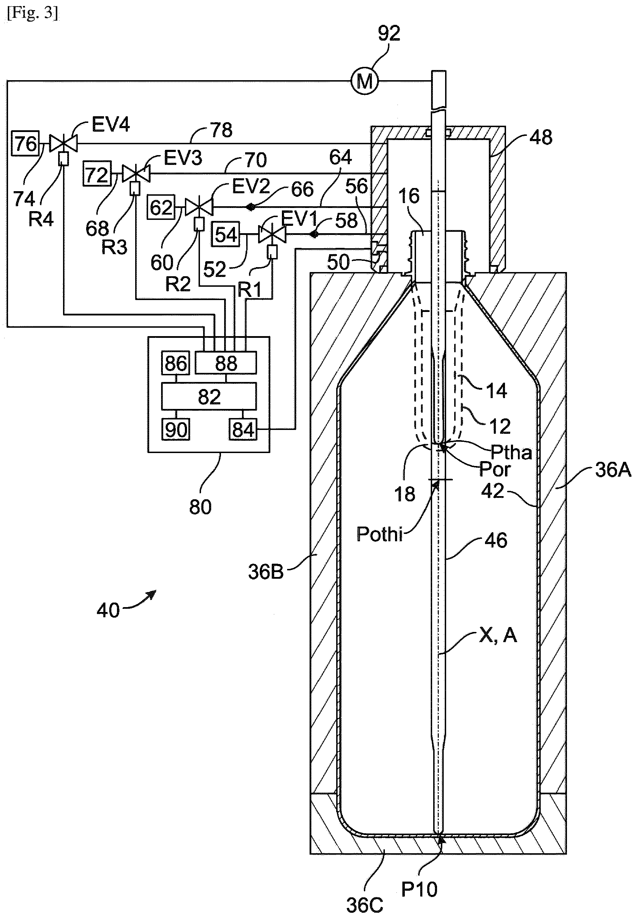

Sur la [Fig.3] est détaillé un poste 40 de soufflage. Il comprend le moule 36, par exemple en acier ou alliage d'aluminium, constitué de deux demi-moules 36A, 36B et d'un fond 36C de moule, définissant la cavité 42 dont le pourtour a la forme du récipient 11 final produit. Le moule 36 est destiné à recevoir successivement des préformes 12 chaudes provenant de la station 24 de chauffage.

Le poste 40 de soufflage comporte aussi une tige 46 d'élongation montée mobile suivant un axe X principal du moule 36, entre une position haute permettant l'introduction d'une préforme 12 dans le moule 36 lorsque celui-ci est ouvert et une position basse dans laquelle l'extrémité de la tige 46 d'élongation à étiré la préforme 12 jusqu'à ce que son fond 18 soit en contact avec le fond 36C de moule, indiquée par la référence « P10 ». Le passage de la position haute à la position basse de la tige 46 d'élongation est réalisé pour étirer la matière axialement de la préforme 12 suivant l'axe X du moule, qui est ici coaxial à l'axe « A » de la préforme 12. Comme cela a été expliqué en préambule, entre sa position haute et sa position basse P10, la tige 46 d'élongation passe par un point d'impact P0 à l'instant où elle entre en contact avec la face interne du fond 18 de la préforme 12.

Le poste 40 de soufflage comporte en outre une tuyère 48 de soufflage, montée mobile entre une position haute lors de l'introduction de la préforme 12 et une position basse dans laquelle l'extrémité inférieure de cette tuyère 48 vient coiffer la préforme 12 de manière étanche afin d'amener le fluide de formage, notamment de l'air, dans la préforme 12 par son col 16 pour venir plaquer la matière plastique contre les parois du moule 36. La tige 46 d'élongation coulisse dans la tuyère 48.

Le poste 40 de soufflage comporte aussi un capteur 50 de pression, débouchant dans la tuyère 48 pour y effectuer une mesure de la pression régnant dans le volume fermé constitué par la tuyère 48 et la préforme 12 pendant l'opération de formage du récipient 11.

Le poste 40 de soufflage comporte un circuit 52 de fluide de formage de pré-soufflage à une pression de présoufflage comprise entre 3 et 15 bars. Ce circuit 52 comprend une source 54 de basse pression et une conduite 56 permettant d'acheminer le fluide de formage de la source 54 de basse pression à la tuyère 48 pour former le récipient 11 et une électrovanne EV1, dite électrovanne de pré-soufflage, permettant la mise en communication de la source 54 de basse pression avec l'intérieur de la préforme 12, par la tuyère 48.

L'électrovanne EV1 est placée sur la conduite 56 entre la source 54 de basse pression et la tuyère 48. Le circuit 52 de fluide de pré-soufflage comporte encore un clapet anti-retour 58 évitant que du fluide venant d'une autre source ou contenu dans la préforme 12 (respectivement le récipient) n'y soit introduit.

Le poste 40 de soufflage comporte aussi un circuit 60 de fluide de soufflage à une pression de soufflage, comprise entre 15 et 40 bars, qui comprend une source 62 de haute pression et une conduite 64 permettant d'acheminer le fluide de la source 62 de haute pression à la tuyère 48 pour former le récipient 11 et une électrovanne EV2, dite électrovanne de soufflage, commandant la mise en communication de la source 62 de haute pression avec la préforme 12.

L'électrovanne EV2 est placée sur la conduite 64 entre la source 62 de haute pression et la tuyère 48. Le circuit 60 de fluide de soufflage comporte encore un clapet anti-retour 66 évitant que du fluide venant d'une autre source ou contenu dans la préforme 12 (respectivement le récipient) n'y soit introduit.

Le poste 40 de soufflage comporte aussi un circuit 68 de récupération du fluide de formage, qui comprend une conduite 70 permettant d'acheminer le fluide de formage contenu dans le récipient après sa fabrication vers des moyens 72 de récupération, tels qu'un circuit ou un réservoir de récupération, et une électrovanne EV3, dite électrovanne de récupération, commandant la mise en communication entre le récipient et les moyens de récupération.

L'électrovanne EV3 est placée sur la conduite 70 du circuit 68 de récupération.

Le poste 40 de soufflage comporte un circuit 74 de dégazage permettant de mettre en communication l'intérieur du récipient avec l'extérieur, pour la remise à la pression atmosphérique, avant la remontée de la tuyère 48 en position haute, le circuit 74 de dégazage comprenant une boucle de mise à l'atmosphère, dont une extrémité est reliée à un silencieux 76 afin d'éviter toute nuisance sonore, et l'autre, à une conduite 78 reliée à la tuyère 48, et une électrovanne EV4, dite électrovanne de dégazage, commandant la mise en communication du fluide de formage contenu dans le récipient 11 avec l'atmosphère.

Le poste 40 de soufflage comporte une unité 80 électronique de commande, notamment sous forme d'un automate programmable industriel (API). L'unité 80 électronique de commande est reliée électriquement à l'électrovanne EV1 de commande du présoufflage via un actionneur R1. Ainsi, le déclenchement d'une phase de pré-soufflage par injection du fluide de formage à la pression de présoufflage est commandé par l'unité 80 électronique de commande.

L'unité 80 électronique de commande est aussi reliée électriquement au capteur 50 de pression, aux électrovannes EV2, EV3, EV4 via des actionneurs R2, R3, R4 respectifs dont la fonction est d'assurer l'ouverture et/ou la fermeture des électrovannes EV2, EV3, EV4.

Dans l'exemple représenté à la [Fig.3], l'unité 80 électronique de commande comprend de manière non limitative un processeur 82, un module 84 d'entrée analogique relié au capteur 50 de pression pour en recueillir les mesures et les convertir en signal numérique en vue de leur traitement par le processeur 82, une mémoire 86 reliée au processeur pour le stockage de données issues du capteur 50 de pression (après conversion), un module 88 de sortie analogique commandé par le processeur 82, et contrôlant les électrovannes EV1, EV2, EV3, EV4 via les actionneurs R1, R2, R3, R4 de manière à moduler l'ouverture et la fermeture pour faire varier le débit de fluide fourni à la tuyère 48, et le dispositif de commande de déplacement axial de la tige 46 d'élongation, une interface 90 de communication pour l'implémentation dans l'unité 80 électronique de commande du programme régentant son fonctionnement.

Dans un mode de réalisation, l'unité 80 électronique de commande est aussi reliée électriquement à des moyens 92 d'entraînement de la tige 46 d'élongation pour commander son déplacement. Les moyens 92 d'entraînement sont constitués par un moteur électrique. Le module 88 de sortie analogique reçoit aussi les données de position de la tige 46 d'élongation provenant du moteur électrique.

Le fonctionnement de l'installation 10 de fabrication est similaire à celui des installations connues, à la différence que l'installation 10 de fabrication met en œuvre un procédé de commande selon lequel la position d'impact POtha théorique de la tige 46 d'élongation est ajustée continuellement au cours de son fonctionnement, la position d'impact POtha théorique ajustée étant plus proche de, voire confondue avec, la position d'impact P0r réelle par rapport à la position d'impact P0thi théorique initiale.

Ainsi, le procédé de fabrication d'un récipient 11 comporte une opération de chauffage du corps 14 de la préforme 12 à une température prédéterminée, notamment supérieure à la température de transition vitreuse, par passage de la préforme 12 à travers la zone 33 de chauffage.

A l'issue de l'opération de chauffage, le procédé comporte une opération d'introduction de la préforme 12 chauffée dans le moule 36 qui a lieu dans une zone 93 associée, comme représenté à la [Fig.1].

Après cette opération, le procédé comporte une opération d'étirage consistant à déplacer une tige 46 d'élongation afin d'étirer la préforme 12 introduite dans le moule 36, la tige 46 d'élongation passant, lors de son déplacement depuis sa position haute vers sa position basse P10, par la position P0r d'impact réel à l'instant où elle entre en contact avec le fond 18 de la préforme 12.

Le procédé de formage comporte aussi une opération de présoufflage consistant à injecter le fluide de formage sous pression, notamment à la pression de présoufflage, dans la préforme 12.

L'ordre du commencement du processus de soufflage est émis en fonction de cette position d'impact POtha ajustée et non en fonction de la position d'impact P0thi théorique initiale déterminée à partir d'une préforme 12 froide, comme expliqué en préambule de la description.

Sur la [Fig.3], où la préforme 12 est illustrée en traits mixtes, la position d'impact (P0r) réelle de la tige 46 d'élongation, alors que l'étirage n'a pas encore commencé est indiquée. A supposer que la préforme 12 ait subi un retrait lors de sa chauffe par dans la station 24 de chauffage par les moyens 32 de chauffage, le point d'impact (P0thi) théorique initial utilisé dans les procédés antérieurs se trouverait un peu plus loin dans la course de la tige 46 d'élongation, tel que ceci est illustré par la [Fig.3].

L'ajustement de la position d'impact (P0th) théorique de la tige 46 d'élongation peut être effectuée en mesurant la longueur d'au moins une préforme 12 après son chauffage et avant son introduction dans le moule 36. Plus particulièrement, on mesure la longueur « L » de la préforme 12 entre le fond 18 et un point de référence du col 16.

Durant le chauffage, seul le corps 14 de la préforme 12 est sensiblement dilaté. Le col 16 de la préforme 12 demeure suffisamment froid pour que ses dimensions ne varient pas. Notamment, la hauteur « h » du tronçon de col 16 pris axialement entre le buvant et la surface 22 d'appui de la collerette 20 demeure sensiblement invariable pendant la chauffe. Ainsi, une fois obtenue la longueur « L » de la préforme 12 entre le point de référence du col 16 et le fond 18, il est aisé de retrouver la distance axiale entre n'importe quel point du col 16 et le fond 18.

Le point de référence du col 16 est par exemple formé par la surface 22 d'appui, cette dernière formant un point fixe de référence par rapport au moule 36.

En variante, le point de référence du col 16 est formé par un bord d'extrémité supérieur du col 16, aussi appelé buvant.

Le procédé de commande de l'opération de formage comporte ainsi au moins une étape « E1 » de mesure de la longueur « L » d'une préforme 12. Comme représenté à la [Fig.2], la longueur « L » est prise parallèlement à l'axe « A » de la préforme 12, entre la surface 22 d'appui de la collerette 20 et le fond 18 du corps de la préforme 12.

Avantageusement, mais pas obligatoirement, pour obtenir une mesure plus précise, la longueur « L » s'étend axialement depuis la surface 22 d'appui jusqu'à un point de la face externe du fond 18 qui est situé au voisinage immédiat du point 23 d'injection. En effet, la dimension du point 23 d'injection est aléatoire d'une préforme 12 à l'autre, ce qui fausserait légèrement une longueur prise entre le point 23 d'injection et la surface 22 d'appui.

L'étape « E1 » de mesure est réalisée après l'opération de chauffage de ladite préforme 12 et avant l'opération d'introduction de ladite préforme 12 dans le moule 36.

L'étape « E1 » de mesure de la longueur « L » est plus particulièrement réalisée dans une zone « Z » de mesure traversée par le trajet 27 de production des préformes 12. Comme représenté à la [Fig.1], la zone « Z » de mesure est située entre la sortie de la zone 33 de chauffage des préformes 12 et le début de l'opération d'introduction des préformes 12 dans le moule 36.

Selon l'exemple représenté à la [Fig.1], la zone « Z » de mesure est agencée sur un tronçon du trajet 27 de production le long duquel les préformes sont transportées par le convoyeur 28 de la station 24 de chauffage. Ainsi, la zone « Z » de mesure est agencée en aval de la zone 33 de chauffage et en amont du premier dispositif 34 de transfert.

Dans le cas où les préformes 12 sont chauffées col 16 en bas, puis retournées col 16 en haut avant d'être transférées au premier dispositif 34 de transfert, la zone « Z » de mesure est avantageusement agencée en aval du point auquel elles sont retournées col en haut, de manière que les préformes 12 traversent la zone 33 de chauffage col 16 en bas.

L'étape « E1 » de mesure est réalisée au moyen d'un dispositif 94 de mesure sans contact qui est apte à mesurer la longueur « L » de la préforme 12 à la volée, c'est-à-dire pendant son déplacement continu le long du trajet 27 de production.

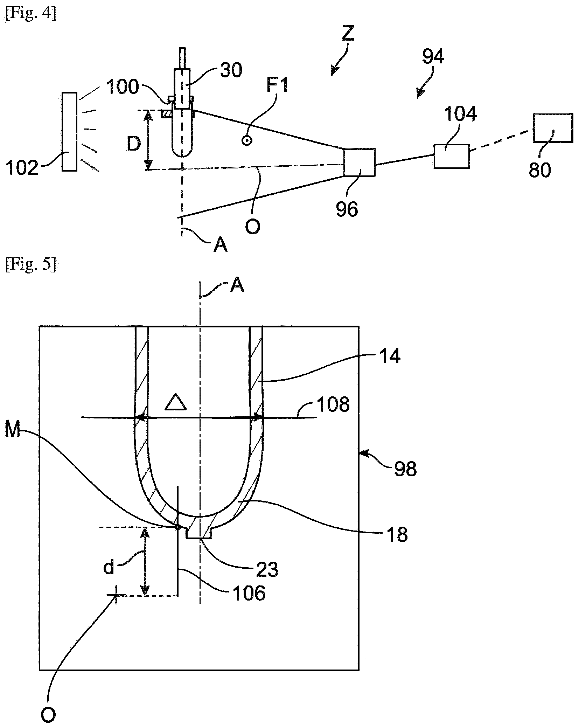

Le dispositif 94 de mesure comporte un dispositif 96 de capture d'image 98 d'une préforme 12 passant dans la zone « Z » de mesure. Le dispositif 96 de capture d'image est plus particulièrement agencé de manière à capturer une image 98 d'au moins un tronçon d'extrémité inférieur du corps 14 comportant le fond 18, comme représenté à la [Fig.5].

Le dispositif 96 de capture d'image est agencé fixe par rapport au sol sur lequel repose l'installation 10 de fabrication.

Le dispositif 96 de capture d'image présente un axe « O » optique qui est agencé orthogonalement à l'axe « A » de la préforme 12. L'axe « O » optique est agencé à une distance axiale « D » connue de la surface 22 d'appui de la collerette 20 de la préforme 12. Ceci est notamment possible car le mandrin 30 qui porte la préforme 12 comporte une face 100 de butée contre laquelle le buvant du col 16 de la préforme est en appui lorsque le mandrin 30 est emboîté avec le col 16. Ainsi, la distance « D » correspond aussi à la distance entre la face 100 de butée du mandrin 30 et l'axe « O » optique. Les face 100 de butée de tous les mandrins 30 du convoyeur 28 sont bien entendu agencées au même niveau pour que la distance « D » demeure la même pour chaque mandrin 30.

L'axe « O » optique est ici agencé sensiblement orthogonalement au sens « F1 » de déplacement de la préforme 12 dans la zone « Z » de mesure.

Pour améliorer la qualité de l'image 98 de la préforme 12 et ainsi permettre un traitement plus précis de cette image 98, le dispositif 94 de mesure comporte aussi une source 102 lumineuse qui est agencée en opposition avec le dispositif 96 de capture d'image par rapport au trajet 27 de production dans la zone « Z » de mesure. La source 102 lumineuse est activée pendant la capture d'image par le dispositif 96 de capture d'image de manière que la préforme 12 soit traversée par un faisceau lumineux émis par la source 102 de lumineux et que ce faisceau lumineux atteigne ensuite le dispositif 96 de capture d'image. Ceci permet d'obtenir une image 98 plus contrastée, plus nette, tout en diminuant le temps nécessaire à la prise de vue, par exemple de moins de 1/100 de seconde.

Le dispositif 94 de mesure comporte aussi une unité 104 électronique de traitement qui comporte les composants structurels et logiciels nécessaires pour traiter l'image 98 obtenue par le dispositif 96 de capture d'image. Cette unité 104 électronique de traitement est raccordée électriquement avec l'unité 80 électronique de commande du poste 40 de formage.

L'étape « E1 » de mesure comporte une première sous-étape « E1-1 » de capture d'une image 98 d'une préforme 12 traversant la zone « Z » de mesure.

Puis l'étape « E1 » de mesure comporte une deuxième sous-étape « E1-2 » de traitement de l'image 98 capturée lors de la première sous-étape « E1-1 » de capture. Cette deuxième sous-étape « E1-2 » de traitement est réalisée au moyen de l'unité 104 électronique de traitement qui reçoit l'image 98 transmise par le dispositif 96 de capture d'image.

Cette deuxième sous-étape « E1-2 » de traitement consiste à détecter au moins un point « M » de mesure de l'image 98 du fond 18 de la préforme 12, puis à mesurer sur l'image la distance « d » entre un point de référence sur l'image dont la position par rapport au col 16 de la préforme 12 est connue et ledit point « M » de mesure selon la direction de l'axe « A » de la préforme 12, cette distance « d » étant ensuite multipliée par un ratio déterminé pour obtenir une estimation de la distance « D » réelle.

Le point de référence est ici formé par l'axe « O » optique du dispositif 96 de capture d'image qui est ici indiquée sur l'image 98 par une croix. La position de l'axe « O » optique est en effet toujours située au même endroit sur l'image 98 capturée. Cette information est une donnée enregistrée dans l'unité 104 électronique de traitement.

La position du point « M » de mesure est déterminée en remontant le long d'une ligne 106 de mesure axiale qui est agencée par défaut à une distance déterminée de l'axe « A » de la préforme 12, par exemple à 4 mm de l'axe « A » de la préforme 12. La ligne 106 s'étend volontairement au-dessous de la position théorique initiale du fond 18, de manière qu'au bas de cette ligne 106, les pixels soient blancs sous l'effet de la source 102 lumineuse. Le point « M » est détecté lorsque les pixels de l'image deviennent beaucoup plus foncés le long de cette ligne 106.

La position de l'axe « A » de la préforme 12 est par exemple déterminé par une analyse de forme de la courbure du fond 18, ou encore en mesurant un diamètre externe du corps 14 puis en prenant le centre de ce diamètre.

En variante, la position de l'axe « A » de la préforme 12 peut aussi constituer une donnée enregistrée dans l'unité 104 électronique de traitement si la capture d'image 98 est réalisée toujours précisément au même endroit de la zone « Z » de mesure.

La conversion de la distance mesurée sur l'image en distance réelle est réalisée après une sous-étape « E1-3 » de calibration.

La sous-étape « E1-3 » de calibration est ici réalisée à chaque itération de la première étape « E1 » de mesure. La sous-étape « E1-3 » de calibration consiste par exemple à prendre la mesure d'une mensuration connue de la préforme 12 pour déterminer un ratio « r » entre une distance sur l'image 98 et une distance réelle.

La mensuration est par exemple le diamètre « Δ » extérieur du corps 14. En effet, le chauffage de la préforme 12 n'a pas un effet sensible sur le diamètre « Δ » extérieur du corps 14 de la préforme 12. Ainsi, le diamètre « Δ » extérieur mesuré sur une préforme 12 froide est sensiblement égal au diamètre « Δ » extérieur du corps 14 sur une préforme 12 chauffée. Le diamètre « Δ » extérieur est par exemple mesuré en suivant une ligne 108 transversale traversant le corps 14 en détectant le changement de contraste des pixels de l'image 98. Le diamètre « Δ » extérieur mesuré réellement sur une préforme froide sur l'image est ensuite divisé par le diamètre « Δ » extérieur mesuré sur l'image pour former le ratio « r ».

En variante non représentée de l'invention, la sous-étape « E1-3 » de calibration est réalisée une seule fois avant la mise en fonctionnement de l'installation 10 de fabrication. Le ratio « r » est ainsi une donnée enregistrée dans l'unité 104 électronique de traitement. Ceci est réalisable notamment lorsque la capture d'image 98 est réalisées toujours précisément au même endroit de la zone « Z » de mesure, la distance entre le dispositif 96 de capture d'image et la préforme 12 demeurant ainsi constante à chaque mesure. Ainsi, le ratio « r » demeure ainsi toujours le même pour chaque image 98 capturée.

La longueur « L » de la préforme 12 est ainsi calculée selon la formule suivante :

$$L = D - (d \times r) - h$$

dans laquelle L est la longueur mesurée de la préforme 12, D est la distance réelle entre la surface 22 d'appui et l'axe « O » optique, d est la distance entre le point M de mesure et l'axe « O » optique mesurée sur l'image 98, r est le ratio multiplicatif pour obtenir la distance réelle à partir d'une distance mesurée sur l'image 98, et « h » est la hauteur axiale du col 18 entre le buvant et la surface 2 d'appui.

A l'issue d'une ou de plusieurs premières étapes « E1 » de mesure, une étape « E2 » d'ajustement de la position « P0th » d'impact de la tige 46 d'élongation est déclenchée. Cette deuxième étape « E2 » consiste à remplacer la valeur précédente de la position « P0th » d'impact théorique à partir d'au moins une mesure de la longueur réalisée lors d'au moins une étape « E1 » de mesure.

Ceci permet ainsi d'adapter au mieux le déclenchement du processus de soufflage en prenant en compte la rétraction des préformes 12 après leur chauffage. Il s'agit d'une adaptation continue qui permet aussi de prendre en compte le fait que la station 24 de chauffage peut chauffer plus ou moins les préformes 12 au cours de sa période de fonctionnement continue.

Pour ce faire, l'unité 104 électronique de traitement transmet la valeur mesurée de la longueur « L » de la préforme 12 à l'unité 80 électronique de commande, ce qui permet à cette dernière de calculer un nouveau point « POtha » théorique ajusté en prenant par exemple en compte l'épaisseur du fond 18 des préforme 12.

L'étape « E2 » d'ajustement de la position d'impact est par exemple réalisée à partir de la longueur « L » mesurée à l'issue de chaque itération de l'étape « E1 » de mesure. Cependant, ceci risque de provoquer un changement de la position d'impact avec une amplitude trop grande car prenant en compte des valeurs extrêmes pour la longueur « L » mesurée.

De préférence, l'étape « E2 » d'ajustement de la position d'impact est donc réalisée à partir de la moyenne de la longueur « L » mesurée à l'issue de plusieurs itérations de l'étape « E1 » de mesure, par exemple dix itérations, réalisées successivement sur plusieurs préformes 12. Ceci permet ainsi de lisser le signal d'ajustement de la position d'impact en évitant des variations trop importantes qui pourraient avoir un effet contreproductif.

Il s'agit par exemple d'une moyenne glissante qui permet d'obtenir un ajustement continu de la position « POtha » d'impact théorique à chaque itération de l'étape « E1 » de mesure.

Chaque étape « E1 » de mesure est réalisée à une fréquence déterminée.

Une itération de la première étape « E1 » de mesure est généralement très rapide, par exemple de l'ordre de 20 ms. Ceci permet de réaliser l'étape « E1 » de mesure pour toutes les préformes 12 passant successivement dans la zone « Z » de mesure. La fréquence à laquelle l'étape « E1 » de mesure est itérée correspond ainsi à la fréquence de passage des préforme 12 dans la zone « Z » de mesure.

En variante, l'étape « E1 » de mesure n'est pas réalisée pour chaque préforme 12. Par exemple la première étape « E1 » de mesure est itéré pour le passage d'une préforme sur un certain nombre de préformes 12, par exemple une préforme sur deux ou une préforme sur trois. Ainsi, la fréquence à laquelle l'étape « E1 » de mesure est itérée est un diviseur de la fréquence de passage des préforme 12 dans la zone « Z » de mesure.

L'invention est particulièrement adaptée aux préformes allégées à faible épaisseur pour lesquelles les taux d'orientation sont élevés et donc la chauffe appliquée est élevée.

Effectivement les faibles épaisseurs de préformes, de l'ordre de 1.5 mm que l'on rencontre de plus en plus sont particulièrement propices à la présence de nombreuses contraintes lors de l'injection. Lors de la chauffe de la préforme, les taux de bi-orientation de la matière sont forts, et la chauffe appliquée dans la station de chauffage doit être à température élevée (125°C - 135°C). L'association de cette forte température avec les contraintes présentes dans les préformes aura pour effet de générer un retrait des préformes sur leur longueur et une légère expansion sur leur diamètre.

Le retrait important concerne essentiellement les préformes de faible épaisseur destinées à réaliser des bouteilles d'eau plate de petit volume (typiquement inférieur à 0,5 l). Les longueurs de ces préformes sont inférieures à 90mm (typiquement entre 60 et 70mm). Le retrait après chauffe sur ce type de préforme peut facilement atteindre 10mm, ce qui correspond à près de 15% de retrait sur une préforme de 70mm pour une expansion de diamètre d'environ 7%. Une même préforme avec une même résine, mais avec un niveau de contraintes réduit, aura après chauffe un retrait d'environ 5mm (soit environ 7% en retrait et 3% en expansion de diamètre).

L'invention est aussi particulièrement adaptée aux préformes réalisées en rPET pour lesquelles les valeurs de retraits sont susceptibles de varier fortement en fonction de la composition du matériau recyclé les constituant.

## Revendications

**1.** Procédé de commande d'un procédé de formage de récipients par étirage-soufflage de préformes (12) en matériau thermoplastique, notamment en PET, chaque préforme (12) comportant un corps (14) dont une extrémité est ouverte par un col (16) et dont une extrémité opposée est fermée par un fond (18), le procédé de formage comprenant, pour chaque préforme (12) se déplaçant le long d'un trajet (27) de production :

- une opération de chauffage de la préforme (12) à une température prédéterminée dans une zone (33) de chauffage ;
- une opération d'introduction de la préforme (12) chauffée dans un moule (36) dans une zone (93) du trajet (27) de production ;
- une opération d'étirage consistant à déplacer une tige (46) d'élongation afin d'étirer la préforme (12), la tige (46) d'élongation passant, lors de son déplacement, par une position (P0) d'impact à l'instant où elle entre en contact avec le fond (18) de la préforme (12) ;

le procédé de comportant

- au moins une étape (E1) de mesure de la longueur (L) entre un point de référence du col (16) et le fond (18) d'une préforme (12) qui est réalisée après l'opération de chauffage de ladite préforme (12) et avant l'opération d'introduction de ladite préforme (12) dans le moule (36) ;
- une étape (E2) d'ajustement de la position (P0) d'impact de la tige (46) d'élongation à partir d'au moins une mesure de la longueur (L) réalisée lors d'au moins une étape (E1) de mesure.

**2.** Procédé de commande selon la revendication précédente, **caractérisé en ce que** le procédé de formage comporte un processus de soufflage consistant à injecter un fluide de formage sous pression dans la préforme (12), le début du processus de soufflage étant déterminé en fonction de la position (POtha) d'impact de la tige (46) d'élongation ajustée lors de l'étape (E2) d'ajustement du procédé de commande.

**3.** Procédé selon l'une quelconque des revendications précédentes, **caractérisé en ce que** l'étape (E1) de mesure de la longueur (L) est réalisée dans une zone (Z) de mesure traversée par le trajet (27) de production, la zone (Z) de mesure étant située entre la zone (33) de chauffage et la zone (93) d'introduction des préformes (12) dans le moule (36).

**4.** Procédé selon la revendication précédente, **caractérisé en ce que** l'opération de chauffage est réalisée dans une station (24) de chauffage comportant un convoyeur (28) transportant les préformes à travers la zone (33) de chauffage, la zone (Z) de mesure étant agencée sur un tronçon du trajet (27) de production le long duquel les préformes (12) sont transportées par ledit convoyeur (28).

**5.** Procédé selon l'une quelconque des revendications précédentes, **caractérisé en ce que** l'étape (E1) de mesure est réalisée au moyen d'un dispositif (94) de mesure sans contact qui est apte à mesurer la longueur (L) de la préforme (12) à la volée lors de son déplacement continu le long du trajet (27) de production.

**6.** Procédé selon la revendication précédente, **caractérisé en ce que** le dispositif (94) de mesure comporte un dispositif (96) de capture d'image d'une préforme (12) passant dans la zone (Z) de mesure, l'étape (E1) de mesure comportant une première sous-étape (E1-1) de capture d'une image (98) de la préforme (12).

**7.** Procédé selon la revendication précédente, **caractérisé en ce que** lors de la première sous-étape (E1-1) de capture d'image, la préforme (12) est éclairée par une source (102) lumineuse située à l'opposé de la position du dispositif (96) de capture d'image par rapport au trajet 27 de production.

**8.** Procédé selon la revendication précédente, **caractérisé en ce que** l'étape (E1) de mesure comporte une deuxième sous-étape (E1-2) de traitement de l'image (98) capturée lors de la première sous-étape (E1-1) de capture au moyen d'une unité (104) électronique de traitement, consistant à détecter au moins un point (M) de mesure de l'image (98) du fond (18) de la préforme (12), puis à mesurer sur l'image (98) la distance (d) entre un point (O) de référence sur l'image (98) dont la position par rapport au col (16) de la préforme (12) est connue et ledit point (M) de mesure selon la direction de l'axe (A) de la préforme, cette distance (d) étant ensuite convertie en une distance réelle (d x r).

**9.** Procédé selon la revendication précédente, **caractérisé en ce que** le point de référence est formé par un axe (O) optique du dispositif (96) de capture d'image.

**10.** Procédé selon l'une quelconque des revendications 8 ou 9, **caractérisé en ce que** la conversion de la distance (d) mesurée sur l'image (98) en distance réelle est réalisée après une sous-étape (E1-3) de calibration.

**11.** Procédé selon la revendication précédente, **carac-**

**térisé en ce que** la sous-étape (E1-3) de calibration est réalisée à chaque itération de la séquence de détermination de la longueur d'une préforme (12), la sous-étape (E1-3) de calibration consistant à prendre la mesure d'une mensuration connue de la préforme, par exemple le diamètre extérieur, pour déterminer un ratio (r) entre une distance sur l'image (98) et une distance réelle.

**12.** Procédé selon l'une quelconque des revendications précédentes, **caractérisé en ce que** l'étape (E2) d'ajustement de la position (POtha) d'impact est réalisée à partir de la longueur (L) mesurée à l'issue de chaque itération de l'étape (E1) de mesure.

**13.** Procédé selon l'une quelconque des revendications 1 à 11, **caractérisé en ce que** l'étape (E2) d'ajustement de la position (POtha) d'impact est réalisée à partir de la moyenne glissante de la longueur (L) mesurée à l'issue de plusieurs itérations de l'étape (E1) de mesure réalisée successivement sur plusieurs préformes (12).

**14.** Procédé selon l'une quelconque des revendications précédentes, **caractérisé en ce que** l'étape (E1) de mesure est réalisée à une fréquence déterminée, par exemple pour chaque préformes passant par la zone de mesure ou pour une préforme sur un nombre déterminé de préformes.

**Patentansprüche**

**1.** Verfahren zur Steuerung eines Verfahrens zum Formen von Behältern durch Streckblasen von Vorformlingen (12) aus thermoplastischem Material, insbesondere aus PET, wobei jeder Vorformling (12) einen Körper (16) aufweist, dessen eines Ende durch einen Hals (14) geöffnet ist, und dessen entgegengesetztes Ende durch einen Boden (18) verschlossen ist, wobei das Formungsverfahren bei jedem Vorformling (12), der sich entlang eines Produktionswegs bewegt (27), umfasst:

- einen Vorgang zum Erwärmen des Vorformlings (12) auf eine vorbestimmte Temperatur in einer Heizzone (33);
- einen Vorgang zum Einführen des erwärmten Vorformlings (12) in ein Formwerkzeug (36) in einer Zone (93) des Produktionswegs (27);
- einen Vorgang zum Verstrecken, der darin besteht, eine Reckstange (46) zu bewegen, um den Vorformling (12) zu verstrecken, wobei die Reckstange (46) bei ihrer Bewegung eine Auftreffposition (P0) zu dem Zeitpunkt durchläuft, zu dem sie mit dem Boden (18) des Vorformlings (12) in Berührung kommt;

das Verfahren umfassend

- mindestens einen Schritt (E1) des Messens der Länge (L) zwischen einem Bezugspunkt des Halses (16) und dem Boden (18) eines Vorformlings (12), der nach dem Vorgang des Erwärmens des Vorformlings (12) und vor dem Vorgang des Einführens des Vorformlings (12) in das Formwerkzeug (36) ausgeführt wird;
- einen Schritt (E2) des Anpassens der Auftreffposition (P0) der Reckstange (46) ausgehend von mindestens einer Messung der Länge (L), die bei mindestens einem Schritt (E1) des Messens ausgeführt wird.

**2.** Verfahren zur Steuerung nach dem vorhergehenden Anspruch, **dadurch gekennzeichnet, dass** das Formungsverfahren einen Blasprozess umfasst, der darin besteht, ein Formungsfluid unter Druck in den Vorformling (12) einzuspritzen, wobei der Beginn des Blasprozesses in Abhängigkeit von der Auftreffposition (POtha) der Reckstange (46) bestimmt wird, die bei dem Schritt (E2) des Anpassens des Verfahrens zur Steuerung angepasst wird.

**3.** Verfahren nach einem der vorhergehenden Ansprüche, **dadurch gekennzeichnet, dass** der Schritt (E1) des Messens der Länge (L) in einer von dem Produktionsweg (27) durchquerten Messzone (Z) ausgeführt wird, wobei die Messzone (Z) zwischen der Heizzone (33) und der Zone (93) zum Einführen der Vorformlinge (12) in das Formwerkzeug (36) gelegen ist.

**4.** Verfahren nach dem vorhergehenden Anspruch, **dadurch gekennzeichnet, dass** der Vorgang des Erwärmens in einer Heizstation (24) ausgeführt wird, die einen Förderer (28) aufweist, der die Vorformlinge durch die Heizzone (33) transportiert, wobei die Messzone (Z) auf einem Abschnitt des Produktionswegs (27) angeordnet ist, entlang dessen die Vorformlinge (12) von dem Förderer (28) transportiert werden.

**5.** Verfahren nach einem der vorhergehenden Ansprüche, **dadurch gekennzeichnet, dass** der Schritt (E1) des Messens mithilfe einer kontaktlosen Messvorrichtung (94) ausgeführt wird, die in der Lage ist, die Länge (L) des Vorformlings (12) bei seiner kontinuierlichen Bewegung entlang des Produktionsweges (27) unmittelbar zu messen.

**6.** Verfahren nach dem vorhergehenden Anspruch, **dadurch gekennzeichnet, dass** die Messvorrichtung (94) eine Vorrichtung (96) zur Erfassung eines Bildes eines in die Messzone (Z) übergehenden Vorformlings (12) aufweist, wobei der Schritt (E1) des Messens einen ersten Teilschritt (E1-1) des Erfassens eines Bildes (98) des Vorformlings (12) umfasst.

**7.** Verfahren nach dem vorhergehenden Anspruch, **dadurch gekennzeichnet, dass** der Vorformling (12) bei dem ersten Teilschritt (E1-1) des Erfassens eines Bildes durch eine Lichtquelle (102) beleuchtet wird, die entgegengesetzt zur Position der Vorrichtung (96) zur Erfassung eines Bildes in Bezug auf den Produktionsweg (27) gelegen ist.

**8.** Verfahren nach dem vorhergehenden Anspruch, **dadurch gekennzeichnet, dass** der Schritt (E1) des Messens einen zweiten Teilschritt (E1-2) des Verarbeitens des bei dem ersten Teilschritt (E1-1) erfassten Bildes (98) mittels einer elektronischen Verarbeitungseinheit (104) umfasst, der darin besteht, mindestens einen Messpunkt (M) des Bildes (98) des Bodens (18) des Vorformlings (12) zu detektieren, dann auf dem Bild (98) den Abstand (d) zwischen einem Bezugspunkt (O) auf dem Bild (98), dessen Position in Bezug auf den Hals (16) des Vorformlings (12) bekannt ist, und dem Messpunkt (M) entlang der Richtung der Achse (A) des Vorformlings zu messen, wobei dieser Abstand (d) anschließend in einen tatsächlichen Abstand (d x r) umgewandelt wird.

**9.** Verfahren nach dem vorhergehenden Anspruch, **dadurch gekennzeichnet, dass** der Bezugspunkt durch eine optische Achse (O) der Vorrichtung (96) zur Erfassung eines Bildes gebildet wird.

**10.** Verfahren nach einem der Ansprüche 8 oder 9, **dadurch gekennzeichnet, dass** das Umwandeln des auf dem Bild (98) gemessenen Abstands (d) in einen tatsächlichen Abstand nach einem Teilschritt (E1-3) des Kalibrierens ausgeführt wird.

**11.** Verfahren nach dem vorhergehenden Anspruch, **dadurch gekennzeichnet, dass** der Teilschritt (E1-3) des Kalibrierens bei jeder Iteration der Sequenz zur Bestimmung der Länge eines Vorformlings (12) ausgeführt wird, wobei der Teilschritt (E1-3) des Kalibrierens darin besteht, die Messung eines bekannten Maßes des Vorformlings, zum Beispiel den Außendurchmesser, zu nehmen, um ein Verhältnis (r) zwischen einem Abstand auf dem Bild (98) und einem tatsächlichen Abstand zu bestimmen.

**12.** Verfahren nach einem der vorhergehenden Ansprüche, **dadurch gekennzeichnet, dass** der Schritt (E2) des Anpassens der Auftreffposition (POtha) ausgehend von der gemessenen Länge (L) nach jeder Iteration des Schritts (E1) des Messens ausgeführt wird.

**13.** Verfahren nach einem der Ansprüche 1 bis 11, **dadurch gekennzeichnet, dass** der Schritt (E2) des Anpassens der Auftreffposition (POtha) ausgehend von dem gleitenden Mittelwert der gemessenen Länge (L) nach mehreren Iterationen des Schritts (E1) des Messens ausgeführt wird, der nacheinander an mehreren Vorformlingen (12) ausgeführt wird.

**14.** Verfahren nach einem der vorhergehenden Ansprüche, **dadurch gekennzeichnet, dass** der Schritt (E1) des Messens mit einer bestimmten Häufigkeit ausgeführt wird, zum Beispiel bei jedem die Messzone durchlaufenden Vorformling oder bei einem Vorformling je einer bestimmten Anzahl von Vorformlingen.

## Claims

**1.** Method for controlling a method for forming containers by stretch-blow-molding preforms (12) made of thermoplastic material, notably PET, each preform (12) including a body (14) one end of which is open via a neck (16) and an opposite end is closed by a bottom (18), the forming method comprising, for each preform (12) moving along a production trajectory (27):

- an operation of heating the preform (12) to a predetermined temperature in a heating zone (33);
- an operation of introducing the heated preform (12) into a mold (36) in a zone (93) of the production trajectory (27);
- a stretching operation consists in moving an elongation rod (46) in order to stretch the preform (12), the elongation rod (46) passing during its movement through an impact position (P0) at the moment it comes into contact with the bottom (18) of the preform (12);

the method comprising

- at least one step (E1) of measuring the length (L) between a reference point on the neck (16) and the bottom (18) of a preform (12) that is carried out after the operation of heating said preform (12) and before the operation of introducing said preform (12) into the mold (36);
- a step (E2) of adjusting the impact position (P0) of the elongation rod (46) on the basis of at least one measurement of the length (L) carried out during at least one measuring step (E1).

**2.** Control method according to the preceding claim, **characterized in that** the forming method includes a blow-molding process consisting in injecting a forming fluid under pressure into the preform (12), the start of the blow-molding process being determined as a function of the impact position (POtha) of the elongation rod (46) adjusted during the adjustment step (E2) of the control method.

3. Method according to either one of the preceding claims, **characterized in that** the step (E1) of measuring the length (L) is carried out in a measuring zone (Z) through which the production trajectory (27) passes, the measuring zone (Z) being situated between the heating zone (33) and the zone (93) for introducing the preforms (12) into the mold (36).

4. Method according to the preceding claim, **characterized in that** the heating operation is carried out in a heating station (24) including a conveyor (28) transporting the preforms through the heating zone (33), the measuring zone (Z) being on a section of the production trajectory (27) along which the preforms (12) are transported by said conveyor (28).

5. Method according to any one of the preceding claims, **characterized in that** the measuring step (E1) is carried out by means of a contactless measuring device (94) that is able to measure the length (L) of the preform (12) on the fly during its continuous movement along the production trajectory (27).

6. Method according to the preceding claim, **characterized in that** the measuring device (94) includes a device (96) for capturing an image of a passing preform (12) in the measuring zone (Z), the measuring step (E1) including a first sub-step (E1-1) of capturing an image (98) of the preform (12).

7. Method according to the preceding claim, **characterized in that** during the image capture first sub-step (E1-1) the preform (12) is illuminated by a light source (102) situated opposite the position of the image capture device (96) relative to the production trajectory (27).

8. Method according to the preceding claim, **characterized in that** the measuring step (E1) includes a second sub-step (E1-2) of processing the image (98) captured during the first, capture sub-step (E1-1) by means of an electronic processing unit (104) consisting in detecting at least one measurement point (M) in the image (98) of the bottom (18) of the preform (12) and then measuring on the image (98) the distance (d) between a reference point (O) in the image (98) the position of which relative to the neck (16) of the preform (12) is known and said measurement point (M) in the direction of the axis (A) of the preform, this distance (d) then being converted into a real distance (d x r).

9. Method according to the preceding claim, **characterized in that** the reference point is formed by an optical axis (O) of the image capture device (96).

10. Method according to either one of Claims 8 or 9, **characterized in that** the conversion of the distance (d) measured in the image (98) into a real distance is carried out after a calibration sub-step (E1-3).

11. Method according to the preceding claim, **characterized in that** the calibration sub-step (E1-3) is carried out on each iteration of the sequence of determining the length of a preform (12), the calibration sub-step (E1-3) consisting in taking the measurement of a known mensuration of the preform, for example the outside diameter, to determine a ratio (r) between a distance in the image (98) and a real distance.

12. Method according to any one of the preceding claims, **characterized in that** the step (E2) of adjusting the impact position (POtha) is based on the length (L) measured following each iteration of the measuring step (E1).

13. Method according to any one of Claims 1 to 11, **characterized in that** the step (E2) of adjusting the impact position (POtha) is carried out on the basis of the sliding mean value of the length (L) measured after a plurality of iterations of the measuring step (E1) carried out successively on a plurality of preforms (12).

14. Method according to any one of the preceding claims, **characterized in that** the measuring step (E1) is carried out at a particular frequency, for example as each preform passes through the measuring zone or for one preform from a particular number of preforms.

[Fig. 1]

31B
32
32
33
24
12
32
32
10
33
F1
Z
F1
4
4
31A
26
93
27
40
36
34
40
36
38
12
12
27
36
11
28
11
11
36
36
27
44
F1

[Fig. 2]

16
20
22
12
L
14
18
23
A

[Fig. 3]

92
M
EV4
78
48
76
74
R4
EV3
70
64
72
68
R3
EV2
66
56
62
16
60
R2
EV1
58
54
52
R1
50
86
88
82
90
84
80
14
12
Ptha
Por
18
42
36A
Pothi
46
36B
40
X, A
36C
P10

[Fig. 4]

[Fig. 5]

Z
94
30
100
F1
104
D
102
80
96
O
A
A
14
108
M
98
18
23
d
106
O

[Fig. 6]

E1-1
E1
E1-2
E1-3
E2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2008081107 A
- EP 3172033 B1